(19) Europäisches Patentamt
European Patent Office
Office européen des brevets

(11) **EP 2 202 324 A1**

(12) **EUROPEAN PATENT APPLICATION**
published in accordance with Art. 153(4) EPC

(43) Date of publication:
**30.06.2010 Bulletin 2010/26**

(51) Int Cl.:
*C21B 11/02* (2006.01)     *F27B 1/14* (2006.01)
*F27B 1/16* (2006.01)

(21) Application number: **08778303.1**

(22) Date of filing: **14.07.2008**

(86) International application number:
**PCT/JP2008/063077**

(87) International publication number:
**WO 2009/031368 (12.03.2009 Gazette 2009/11)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **07.09.2007  JP 2007233287
07.07.2008  JP 2008177087**

(71) Applicants:
• **Nippon Steel Corporation
Chiyoda-ku
Tokyo
100-8071 (JP)**
• **Kuettner Gmbh & Co. Kg
Essen 45128 (DE)**

(72) Inventors:
• **SHINOTAKE, Akihiko
Tokyo 100-8071 (JP)**
• **OMATSU, Yasuhiko
Tokyo 100-8071 (JP)**

• **NAITO, Masaaki
Tokyo 100-8071 (JP)**
• **AKAGI, Kazushi
Tokyo 100-8071 (JP)**
• **NITTA, Michio
Tokyo 100-8071 (JP)**
• **TSUBOTA, Jun
Tokyo 100-8071 (JP)**
• **KIKUCHI, Zen-etsu
Tokyo 100-8071 (JP)**
• **MURASE, Shin
Tokyo 100-8071 (JP)**
• **SUZUKI, Hiroyuki
Tokyo 100-8071 (JP)**
• **MATSUDA, Tsuyoshi
Tokyo 100-8071 (JP)**
• **LACHNER, Hans Jaan
Essen 45128 (DE)**
• **LEMPERLE, Michel
Essen 45128 (DE)**

(74) Representative: **Vossius & Partner
Siebertstrasse 4
81675 München (DE)**

(54) **VERTICAL FURNACE AND METHOD OF OPERATING THE SAME**

(57) A shaft furnace for producing pig iron by charging an iron source of high metallization rate whose average metallization rate is 95% or greater and a solid fuel containing 70 to 100 mass% of blast furnace coke in layered state or mixed state from the furnace top onto a bed of coke filling a lower region of the furnace and melting the iron source by blowing in air through tuyeres at the bottom region of the furnace, which shaft furnace is **characterized** that: (i) the distance from the lower face of the lowest tier of tuyeres in the direction of the furnace height to the upper face of a bottom plate at the furnace bottom is 0.7-fold or greater the furnace diameter at the location of the lower face of the tuyeres; and (ii) as calculated from the heat conductivities and thicknesses of lining refractories individually installed on the shaft part, tuyere periphery, wall portion on the furnace bottom side and the bottom plate at the furnace bottom, the furnace body heat radiation per unit internal volume in the furnace height range from the shaft part to the bottom plate at the furnace bottom is 0.15 MW/m$^3$ or less.

EP 2 202 324 A1

# Fig.1

**Description**

FIELD OF THE INVENTION

This invention relates to a shaft furnace for producing pig iron from scrap iron, pig iron scraps arising in the course of ironmaking processes, ironmaking dust and other iron waste materials, and to an operation method of the furnace.

DESCRIPTION OF THE RELATED ART

The mainstream method for producing pig iron from iron ore as the iron source is the blast furnace method. In the blast furnace method, pig iron is produced from iron ore that is charged from the furnace top and reacts with coke during downward movement through the furnace owing to hot air blown in through tuyeres, and the iron oxide contained in the iron ore is indirectly reduced at the rate of around 60% or greater by hot reducing gas (CO) passing upward from the bottom of the furnace.

Therefore, in order to establish the required indirect reduction rate in the blast furnace method, the blast air temperature is made 1,000 °C or greater and the blast velocity is increased to form raceways in front of the tuyeres, thereby producing reducing gas (CO) so that the gas utilization rate $\eta_{co}$ (= $CO_2$ / (CO + $CO_2$)) in this region is 0.

On the other hand, the cupola method and the like are known as methods for producing pig iron by melting iron sources of higher metallization rate than iron ore, consisting primarily of iron scraps, casting scraps and pig iron, in a shaft furnace of smaller internal volume than an ordinary blast furnace.

Since the shaft furnace uses high metallization rate iron sources not requiring reduction, adequate melting of the iron sources becomes difficult if raceways are formed in front of the tuyeres inside the furnace as in the case of the blast furnace. This is because the exothermic combustion reaction (C + $O_2 \rightarrow CO_2$) between oxygen ($O_2$) in the blast air and coke (C) is followed by an endothermic solution loss reaction ($CO_2$ + C $\rightarrow$ 1/2 CO) between $CO_2$ gas and coke (C), whereupon furnace heat decreases.

Therefore, in an operation using a shaft furnace such as a cupola to melt high metallization rate iron sources, the practice has been to blow oxygen-enriched cold air or hot air of 600 °C or less into the furnace through the tuyeres under the condition of a low blast velocity that does not form raceways in front of the tuyeres inside the furnace, and, in addition, to inhibit heat decrease in the furnace by using as the solid fuel coarse foundry coke, which is less likely to give rise to solution loss than blast furnace coke.

Foundry coke is larger in grain size, stronger and lower in ash than blast furnace coke. Foundry coke is advantageous to blast furnace coke in the point that its large grain size makes its solution loss reactivity low and the point that its large grain size, high strength and low ash minimize coke powdering and slag generation, thereby establishing excellent air furnace permeability.

However, foundry coke is more expensive that blast furnace coke and therefore increases pig iron production cost. Stable operation of a shaft furnace using much blast furnace coke is therefore desirable in order to lower pig iron production cost.

Moreover, hopes are also held for the application of the cupola and other shaft furnaces with greater operational freedom than the blast furnace to the recycling of the high-iron-content ironmaking dust and pig iron scraps generated in large quantities in the ironmaking process.

As ironmaking dust contains much iron oxide and is lower in metallization rate than pig iron scraps, it requires not only the iron source melting function of conventional shaft furnaces like the cupola but also the additional capability to reduce iron oxide contained in iron sources with low metallization rates.

Against this backdrop, recent years have seen the proposal of methods of operating shaft furnaces provided with both iron source melting and partial reduction capability to enable operation of a shaft furnace like the cupola using dust agglomerates, self-reducing agglomerates (agglomerates with high carbon material content) and other iron sources requiring reduction, in addition to iron scraps from the sintering process, casting scraps, pig iron and other iron sources (of high metallization rate) not requiring reduction.

For example, Goksel et al. (Transactions of the American Foundrymen's Society, Vol. 85, AFS Des Plaines, III, (1977), pp. 327-332) report that a shaft furnace requiring reduction capability was operated using 5 mass% of carbon-containing pellets, by blowing hot air into the furnace at a relatively low blast temperature of 600 °C or less, without, as in a blast furnace, forming raceways in front of the tuyeres.

Moreover, Patent Application Publication Hei 01-501401 teaches a method using a blast furnace that has secondary tuyeres and a melting furnace that has primary tuyeres and comprises a hearth of larger diameter than the blast furnace, wherein only iron sources composed of iron scraps and self-reducing ore are charged from the blast furnace top onto a fuel pellet bed composed of fine coke located at the junction between the blast furnace and the hearth.

With this method, direct smelting reduction occurs at the hearth region between the self-reducing ore and the fine coke of the fuel pellets and this endothermic reaction lowers the melting heat, but heat for melting the iron scraps at a high combustion efficiency $\eta_{co}$ (= $CO_2$ / (CO + $CO_2$) can be obtained owing to heat generated by the combustion reaction of CO at the secondary tuyeres of the blast furnace.

However, this method has problems such as that air permeability is degraded by the direct smelting reduction of the self-reducing agglomerates at the hearth region and that bed coke consumption increases owing to carburization into the molten iron. Moreover, the direct smelting reduction of the self-reducing agglomerates at the hearth region is an endothermic reaction, and when this lowers the temperature at the hearth region, pig tapping becomes unstable, which makes blast volume reduction or even blast shutdown indispensable, thus greatly degrading pig iron productivity.

Japanese Patent Publication (A) No. H10-036906 teaches an improvement on the operation method of charging from the top region of a shaft furnace onto a coke bed laid at the bottom of the furnace dust agglomerates, self-reducing agglomerates and other iron sources requiring reduction, iron scraps requiring only melting, pig iron and other iron sources, and fine coke, and conducting reduction and melting by blowing in oxygen-enriched gas of normal or 600 °C or less temperature through two vertically-spaced tiers of tuyeres provided in the furnace wall, wherein the improvement lies in conducting a calculation based on the average iron source metallization rate to determine the optimum $\eta_{co}$ (gas utilization rate) for the reduction and melting, and regulating the height of the furnace charge to control the $\eta_{co}$ of the exhausted gas to the optimum range.

In another aspect of this operation method, there has been proposed an operation method in which iron sources of high metallization rate not requiring reduction are mixed with coke of relatively large grain size and charged from the furnace top region into the furnace center region, iron sources of low metallization rate requiring reduction are mixed with fine coke and charged into the furnace peripheral region from the furnace top region, and the height of the coke bed at the furnace bottom region and/or the height of the furnace charge are/is regulated to control the $\eta_{co}$ (gas utilization rate) of the exhausted gas to the optimum range for reduction and melting.

Further, Japanese Patent Publication (A) No. H09-203584 teaches a method in which charging of self-reducing agglomerates, dust agglomerates and other iron sources, fine coke, and other raw material into a shaft furnace is conducted with two or more raw material charges defined as one cycle, iron scraps and other iron sources and the like not requiring reduction and coarse coke (grain size of 60 mm or greater) are mixed and charged into the furnace center region in every cycle, self-reducing agglomerates, dust agglomerates and other iron sources and the like requiring reduction are mixed with fine coke (grain size of 60 mm or less) and charged into the furnace peripheral region in every cycle, and the iron source/coke weight ratio at the furnace center region is made larger than that at the furnace peripheral region.

In the methods of Japanese Patent Publication (A) No. H10-036906 and Patent Publication (A) No. H09-203584, the mixture obtained by combining high metallization rate iron sources such as iron scraps with coarse foundry coke and the mixture obtained by combining low metallization rate iron sources requiring reduction such as self-reducing agglomerates with fine blast furnace coke are charged separately in the radial direction of the furnace, thereby making it possible to inhibit reduction of iron source melting heat owing to solution loss reaction (endothermic reaction) of blast furnace coke.

However, these methods have drawbacks in that they require special charging equipment for mixing and charging coke of suitable grain sizes separately in the radial direction of the furnace and that numerous control factors are involved at the time of charging, which lowers and makes the methods inappropriate for an operation aimed at high productivity.

Coarse foundry coke must be charged into the furnace center region in order to enhance air permeability at the furnace center region. There is therefore a limit to how far the amount of cheap fine blast furnace coke can be increased.

Japanese Patent Publication (A) No. 2007-002305 teaches a cupola equipped with tuyeres in such manner that the ratio of the area from the tuyere tips to the furnace center to area from the inner wall of the furnace body to the furnace center (the tuyere tip area ratio) is in the range 32 to 42%, and a method of using this cupola for smelting molten iron with a cupola that smelts molten iron by melting a cold iron source using coke as the main fuel.

This cupola decreases contact between the high-temperature $CO_2$ gas generated by coke combustion and the furnace wall to reduce heat removal via the side wall and thereby improve heat efficiency in the furnace. Although this makes it possible to switch 30 to 40% of the used coke from foundry coke to blast furnace coke, replacement of more than 40% with blast furnace coke increases the amount of heat absorbed by the solution gas reaction of coke, causing the temperature at the furnace bottom to fall and make stable production of molten iron difficult.

SUMMARY OF THE INVENTION

A study done by the inventors found that when a shaft furnace is operated using as solid fuel a large amount of blast furnace coke high in ash, low in strength and small in grain size compared with foundry coke, the pressure loss in the furnace becomes high and, depending on the operating conditions, operation may proceed under a furnace pressure condition of greater than 200 hPa.

Moreover, when dust agglomerates, self-reducing agglomerates (high carbon (agglomerates with high carbon material content) and other low metallization rate iron sources (iron sources requiring reduction) are used in large amounts as iron sources, the furnace pressure tends to increase because slag generated by iron oxide reduction lowers the air permeability in the furnace (pressure loss increases).

Cupolas and other shaft furnaces used to melt and reduce waste iron materials like scrap, pig iron scraps, and ironmaking dust are ordinarily designed assuming a furnace pressure of around 50 to 100 hPa during operation. Through their study, the inventors ascertained that the problems set out below are encountered when operation is carried out under the aforesaid high furnace pressure condition using such a conventional shaft furnace.

Specifically, when the shaft furnace is operated at a high pressure exceeding around 200 hPa, the furnace pressure falls sharply at the time of blast volume reduction (reduction of the amount of air blast through the tuyeres) and blast shutdown (suspension of air blast through the tuyeres). As a result, the molten pig and slag, particularly the slag (upper hot metal layer), which is of light specific weight, rise abruptly to pose a risk of fusing damage to the tuyeres.

While shaft furnaces like the cupola offer greater operating freedom than a blast furnace, the frequency of blast volume reduction in response to changing furnace conditions during operation and of blast shutdown for dealing with iron and slag tapping problems or equipment problems is higher than in a blast furnace. The problems of molten pig and slag level rise and fusing damage must be avoided because they greatly lower pig iron productivity.

The inventors' study further revealed that use of much blast furnace coke of small grain size promotes the aforesaid solution loss reaction (C (coke) + $CO_2$ (coke combustion gas) $\rightarrow$ 2CO - Q (absorbed heat)), so that when operation is conducted using a conventional shaft furnace, the amount of heat in the furnace decreases to cause inadequate iron source melting, while productivity and molten iron quality are degraded due to pig and slag tapping destabilization and the like caused by a decline in furnace temperature.

In the light of the foregoing state of the prior art, the present invention aims to provide a shaft furnace and an operation method using the shaft furnace, which enable low-cost, high-productivity operation by preventing tuyere fusing damage resulting from slag ascent caused by decrease in furnace pressure at the time of blast volume reduction and blast shutdown during operation at a high furnace pressure using a solid fuel containing much blast furnace coke and by compensating for decrease in furnace heat caused by solution loss reaction of coke.

The present invention is directed to aforesaid goal, and the gist thereof is as set out below.

(1) A shaft furnace for producing pig iron by charging an iron source of high metallization rate whose average metallization rate is 95% or greater and a solid fuel containing 70 to 100 mass% of blast furnace coke in layered state or mixed state from the furnace top onto a bed of coke filling a lower region of the furnace and melting the iron source by blowing in air through tuyeres at the bottom region of the furnace, which shaft furnace is characterized that:

(i) a distance from a lower face of the lowest tier of tuyeres in the direction of the furnace height to an upper face of a bottom plate at the furnace bottom is 0.7-fold or greater the furnace diameter at the location of the lower face of the tuyeres, and
(ii) as calculated from the heat conductivities and thicknesses of lining refractories individually installed on a shaft part, a tuyere periphery, a wall portion on the furnace bottom side and the bottom plate at the furnace bottom, the furnace body heat radiation per unit internal volume in the furnace height range from the shaft part to the bottom plate at the furnace bottom is 0.15 MW/m$^3$ or less.

(2) A shaft furnace according to (1), **characterized in that** an iron source of low metallization rate whose average metallization rate is less than 95% is used as an iron source in addition to the iron source of high metallization rate whose average metallization rate is 95% or greater.

(3) A shaft furnace according to (1) or (2), **characterized in that** the heat conductivities of the lining refractories installed on the shaft part, the tuyere periphery, the wall portion on the furnace bottom side and the bottom plate at the furnace bottom are 2W/m k or less, 6W/m · k or less, 6W/m - k or less, and 2W/m · k or less, respectively, and the thicknesses of the lining refractories are 400 mm or greater, 550 mm or greater, 550 mm or greater, and 200 mm or greater, respectively.

(4) A shaft furnace according to any of (1) to (3), **characterized in that** the blast furnace coke is of a maximum grain size of 72 mm or less and an ash content of 9 mass% or greater.

(5) A shaft furnace according to any of (1) to (4), **characterized in that** the iron source of high metallization rate is one or more of iron scraps, pig iron, casting scraps, hot briquetted iron (HBI) and direct reduced iron (DRI), and the iron source of low metallization rate is dust agglomerates or self-reducing agglomerates.

(6) An operation method of a shaft furnace to produce pig iron using a shaft furnace according to any of (1) to (5) by charging an iron source of high metallization rate whose average metallization rate is 95% or greater and a solid fuel containing 70 to 100 mass% of blast furnace coke in layered state or mixed state from the furnace top onto a bed of coke filling a lower region of the furnace and melting the iron source by blowing in air through tuyeres at the bottom region of the furnace, which operation method of a shaft furnace is characterized that:

air is blown through the tuyeres to make superficial gas velocity 1 Nm/s or greater.

(7) An operation method of a shaft furnace according to (6), **characterized in that** an iron source of low metallization rate whose average metallization rate is less than 95% is used as an iron source in addition to the iron source of high metallization rate whose average metallization rate is 95% or greater.

(8) An operation method of a shaft furnace according to (6) or (7), **characterized in that** the heat conductivities of the lining refractories installed on the shaft part, the tuyere periphery, the wall portion on the furnace bottom side and the bottom plate at the furnace bottom are 2W/m · k or less, 6W/m · k or less, 6W/m · k or less, and 2w/m · k or less, respectively, and the thicknesses of the lining refractories are 400 mm or greater, 550 mm or greater, 550 mm or greater, and 200 mm or greater, respectively.

(9) An operation method of a shaft furnace according to any of (6) to (8), **characterized in that** the blast furnace coke is of a maximum grain size of 72 mm or less and an ash content of 9 mass% or greater.

(10) An operation method of a shaft furnace according to any of (6) to (9), **characterized in that** the iron source of high metallization rate is one or more of iron scraps, pig iron, casting scraps, hot briquetted iron (HBI) and direct reduced iron (DRI), and the iron source of low metallization rate is dust agglomerates or self-reducing agglomerates.

In the operation of a cupola or other shaft furnace under high furnace pressure condition using a large amount of cheap blast furnace coke as solid fuel, the present invention makes it possible to establish an adequate depth from the tuyeres of the shaft furnace to the furnace bottom, to optimize the height of the furnace tuyeres and the furnace body heat radiation from the shaft part to the bottom plate at the furnace bottom, thereby preventing tuyere fusing damage problems caused by slag level rise when furnace pressure falls during blast volume reduction or blast shutdown, and to compensate for decrease in furnace heat caused by solution loss reaction of coke.

BRIEF DESCRIPTION OF THE DRAWING

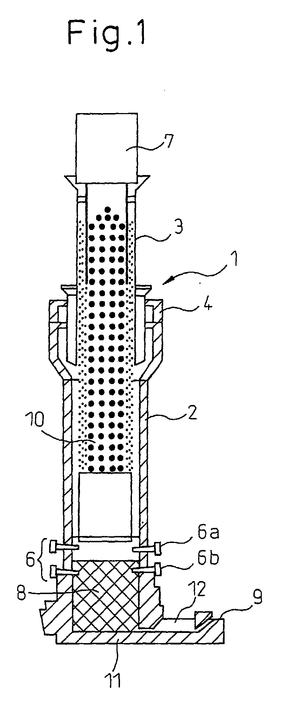

FIG. 1 is a diagram showing one mode of implementing the shaft furnace according to the present invention.

BEST MODE FOR CARRYING OUT THE INVENTION

An embodiment of the present invention will be explained with reference to the drawing.

FIG. 1 shows one mode of implementing the shaft furnace.

The shaft furnace, designated by reference numeral 1, is composed basically of a furnace body 2 equipped at the lower part with tuyeres 6, a gas intake 4 provided in the upper part of the furnace body 2, and an upper furnace unit 3 installed to pass through the gas intake 4.

The tuyeres 6 are basically composed of upper tuyeres 6a and lower tuyeres 6b provided in two tiers in the direction of furnace height. The upper tuyeres 6a are installed at a height immediately above the surface of a coke bed 8 filling the lower part of the furnace, and the lower tuyeres 6b are installed at a height within the coke bed 8.

In order to prevent the formation of raceways in front of the tuyeres, the tuyere diameter is defined so that the blast velocity is slower than in a blast furnace. Whilst the furnace of this embodiment is equipped with tuyeres arranged in two tiers, the invention is not limited to this configuration and, depending on the blast conditions, operation is possible using tuyeres arranged in a single tier.

When air is blown in through the upper tuyeres 6a and lower tuyeres 6b arranged in two tiers, air of room temperature or of 600 °C or less is blown in through the lower tuyeres 6b, mainly for burning coke, and room temperature air is blown in through the upper tuyeres 6a to burn CO gas generated by solution reaction (endothermic reaction) between part of the combustion gas ($CO_2$) and coke, thereby compensating for the decrease in iron source melting heat caused by the (endothermic) solution reaction of coke.

When air is blown in through a single tier of tuyeres, the tuyeres are installed at the same height as the lower tuyeres 6b. In order to promote coke combustion so as to generate more iron source melting heat, it is necessary to increase the oxygen concentration of the air of room temperature or 600 °C or less blown in through the tuyeres by enriching it with oxygen.

On the other hand, when air is blown in through the two tiers of tuyeres shown in FIG. 1, heat compensation is possible with the air blown in through the upper tuyeres 6a. In this case, therefore, it is not always necessary to enrich the oxygen content of the air of room temperature or 600 °C or less blown in through the lower tuyeres 6b for the purpose of promoting coke combustion and generating more iron source melting heat.

The raw materials 10 are fed out from their respective stock hoppers (not shown), each is weighed with a weight scale (not shown), fed into a bucket 7 serving as a charging unit, and charged via the bucket 7 from the upper furnace unit 3 of the shaft furnace 1 onto the coke bed 8 formed at the lower region of the furnace 1 so that the solid fuel and iron sources assume a layered state or mixed state.

In order to charge the solid fuel and iron sources in a layered state, the solid fuel and iron sources are charged into the bucket 7 in layers and charged into the furnace by opening the bottom of the bucket 7. However, since some of the solid fuel and iron sources mix together while falling, the solid fuel and iron sources are generally charged in a layered state with a portion of the solid fuel and iron sources being charged in a mixed state.

The deposition height (stock level) of the raw materials 10 is adjusted to the height of the upper part of the upper furnace unit 3 to establish a condition in which the raw materials 10 fill the region of the upper furnace unit 3 extending upward above the gas intake 4, thereby sealing the uppermost part of the furnace top (this being called a "material seal").

With the descent of the raw materials 10 due to raw material melting in the course of operation, the deposition height (stock level) of the raw materials 10 naturally falls. Therefore, in order to ensure stable raw material melting while keeping the upper furnace unit 3 sealed, the deposition height (stock level) of the raw materials 10 is measured with a level meter or the like (not shown) attached inside the upper furnace unit 3, and the charge timing of the raw materials 10 is controlled to maintain the stock level at a predetermined level.

The iron sources in the raw materials 10 charged into the upper furnace unit of the shaft furnace 1 from above are melted during descent within the furnace by the heat of coke (C) combustion by oxygen in the air blown in through the tuyeres 6, and the iron oxide contained in some of the iron sources is reduced by reducing gas (CO), solid carbon (C), or carbon ([C]) in the molten iron, to further descend to the coke bed 8 and accumulate at the furnace bottom.

A connecting pipe 12 communicating with a pig and slag storage unit 11 provided outside the furnace is installed at the height level of the upper surface of the bottom plate at the furnace bottom, and molten pig and slag collecting at the bottom inside the furnace flow through the connecting pipe 12 into the pig and slag storage unit 11 outside the furnace. The upper molten slag layer and lower molten pig layer of the molten pig and slag are separated, and the molten pig of the lower layer is extracted through a tap hole 9.

The melting and reduction zone where the melting and some reduction of the iron sources is conducted is formed mainly within the furnace height range of about 1 to 2.5 m above the surface of the coke bed 8 (equivalent to about 1 to 2.5 charges of the raw materials contained in the bucket 7).

In the present invention, a solid fuel containing 70 to 100 mass% of blast furnace coke is used as the solid fuel. Blast furnace coke is cheaper than foundry coke, and thanks to its production in the steelmaking process, a stable supply is available. The blast furnace coke content of the solid fuel is defined as 70 mass% or greater because a solid fuel containing 70 mass% or greater of blast furnace coke must be used to reduce pig iron cost markedly.

On the other hand, in this invention, the blast furnace coke contained in the solid fuel at the rate of 70 mass% or greater has the properties of smaller grain size, higher ash content, and lower strength than ordinary foundry coke.

Ordinary foundry coke has a grain size of 300 mm or greater maximum grain diameter and 80 mm or greater average grain diameter, and an ash content of 9% or less. In contrast, the present invention uses blast furnace coke has a maximum grain diameter of 72 mm or less and average grain diameter of 60 mm or less, and an ash content of 9 mass% or greater.

In general, furnace pressure loss increases with decreasing coke grain size, and the amount of slag generated increases with increasing coke ash content, with the result that furnace pressure rises due to declining air permeability. Moreover, when coke strength is low, the proportion of the coke crushed into powder during coke charging or when subjected to a load in the furnace increases to lower furnace air permeability, thereby increasing pressure loss. The blast furnace coke used in the present invention preferably has a grain size of 40 mm or greater and an ash content of 14% or less.

In a study conducted by the inventors, it was found that when iron sources are melted, or melted and reduced, using solid fuel containing 70 mass% or greater of blast furnace coke having the foregoing properties, the furnace pressure loss increases and furnace pressure during operation exceeds 200 hPa.

The rise in furnace pressure during operation is also affected by the iron sources, namely, the furnace pressure during operation is higher when melting and reducing iron sources with low metallization rates than when melting only iron sources with high metallization rates.

In the present invention, the iron sources are classified into iron sources of high metallization rate whose average metallization rate is 95% or greater and iron sources of low metallization rate whose average metallization rate is less than 95%.

The term "iron sources of high metallization rate whose average metallization rate is 95% or greater" means iron source of high metallization rate requiring only melting (not requiring reduction), among which iron scraps, pig iron, casting scraps, hot briquetted iron (HBI) and direct reduced iron (DRI) can be listed as typical. The term "iron sources of low metallization rate whose average metallization rate is less than 95%" means iron source of low metallization rate requiring reduction, among which dust agglomerates and self-reducing agglomerates (agglomerates with high carbon material content) can be listed as typical.

When iron sources are melted and reduced using iron sources of low metallization rate whose average metallization rate is less than 95% in addition to iron sources of high metallization rate whose average metallization rate is 95% or greater, the slag generated by the melting and reduction of the iron oxides in the iron sources of low metallization rate lower the air permeability of the furnace, so that the furnace pressure is more likely to increase than when iron sources are melted using only iron sources of high metallization rate.

Cupolas and other shaft furnaces used to melt and reduce waste iron materials like scrap, pig iron scraps, and ironmaking dust are ordinarily designed assuming a furnace pressure of around 50 to 100 hPa during operation. A study done by the inventors, found that the following problems arise when such a conventional shaft furnace is operated under the aforesaid high furnace pressure condition.

Specifically, when a shaft furnace is operated at a high furnace pressure exceeding around 200 hPa, the furnace pressure falls sharply at the time of blast volume reduction (reduction of the amount of air blast through the tuyeres) and blast shutdown (suspension of air blast through the tuyeres). As a result, the molten pig and slag, particularly the slag (upper hot metal layer), which is of light specific weight, rise abruptly to pose a risk of fusing damage to the tuyeres.

While shaft furnaces like the cupola offer greater operating freedom than a blast furnace, the frequency of blast volume reduction in response to changing furnace conditions during operation and of blast shutdown for dealing with iron and slag tapping problems or equipment problems is higher than in a blast furnace. The problems of molten pig and slag level rise and fusing damage must be avoided because they greatly lower pig iron productivity.

The inventors' study further revealed that use of much blast furnace coke of small grain size promotes the aforesaid solution loss reaction (C (coke) + $CO_2$ (coke combustion gas) → 2CO - Q (absorbed heat)), so that when operation is conducted using a conventional shaft furnace, the amount of heat in the furnace decreases to cause inadequate iron source melting, while productivity and molten iron quality are degraded due to pig and slag tapping destabilization and the like caused by a decline in furnace temperature.

In order to overcome the aforesaid problems of tuyere fusing damage and heat decrease arising when a shaft furnace is operated to melt, or melt and reduce, iron sources using solid fuel containing a large amount of such a blast furnace coke, the present invention is, as set out in detail below, **characterized in that** it optimizes the shaft furnace in the points of (i) the location of the lowest tier of tuyeres in the furnace height direction and (ii) the furnace body heat radiation determined by the heat conductivities and thicknesses of lining refractories in the furnace height range from a shaft part to a bottom plate at the furnace bottom and also by the furnace temperature condition and the furnace cooling condition.

In the following, the shaft furnace of the present invention will be explained with regard to the reasons for defining the location of the lowest tier of tuyeres in the furnace height direction and the furnace body heat radiation determined by the heat conductivities and thicknesses of the lining refractories in the furnace height range from the shaft part to the bottom plate at the furnace bottom.

(Location of lowest tier of tuyeres: 0.7-fold or greater the furnace diameter from the upper face of the bottom plate at the furnace bottom)

As explained in the foregoing, the furnace bottom of the shaft furnace body has a communicating conduit structure (siphon structure) comprising the pig and slag storage unit provided outside the furnace body and the connecting pipe, so operation is possible until the pressure of the molten pig and slag collected in the storage unit balances with the furnace pressure (gas pressure).

Through their study, the inventors found that when iron sources are melted, or melted and reduced, using solid fuel containing 70 mass% or greater of blast furnace coke having as properties a maximum grain size of 72 mm or less, average grain size of 60 mm or less, and ash content of 9 mass% or greater, the furnace pressure loss increases and stable operation is possible up to a maximum furnace pressure of 250 hPa during operation.

On the assumption of the furnace pressure during operation of the invention shaft furnace reaching 300 hPa, the location of the lowest tier of tuyeres in the furnace height direction is defined to prevent tuyere fusing damage during slag rise by taking into consideration the amount by which the slag height level (highest point of the molten pig and slag) rises between that under such operation at maximum furnace pressure condition and that under reduced furnace pressure condition at the time of blast volume reduction (reduction of the amount of air blast through the tuyeres) or blast shutdown (suspension of air blast through the tuyeres), namely, the location of the lowest tier of tuyeres in the furnace height direction is defined to make the distance from the lower face the tuyeres to the upper face of the bottom plate at the furnace bottom 0.7-fold or greater the furnace diameter at the location of the lower face of the tuyeres.

The reason for defining the location of the lowest tier of tuyeres in the furnace height direction as a value relative to the furnace diameter at the location of the lower face of the tuyeres is that the amount of slag rise when the furnace pressure falls varies as a function of the shaft furnace diameter.

When the height of the tuyeres above the furnace bottom is a short distance less than 0.7-fold the furnace diameter, the tuyeres are liable to sustain fusing damage when the molten pig and slag collected at the furnace bottom rises to the vicinity of the tuyere level during a drop in furnace gas pressure owing to blast volume reduction, blast shutdown or the like.

Although the present invention is premised on a maximum furnace pressure during operation of 300 hPa, the pressure may momentarily exceed 300 hPa. Therefore, for the purpose of preventing blast volume fluctuation in the vicinity of the blast limit pressure, the furnace design pressure of 300 hPa or less is preferably met by equipping the invention shaft furnace with a blower having a blast pressure capacity of 350 hPa or greater.

(Furnace body heat radiation per unit internal volume: 0.15 MW/m$^3$ or less)

Through their study, the inventors found that when iron sources are melted, or melted and reduced, in a conventional shaft furnace, using solid fuel containing 70 mass% or greater of blast furnace coke of a maximum grain size of 72 mm or less and average grain size of 60 mm or less, the solution loss reaction (C (coke) + $CO_2$ (coke combustion gas) $\rightarrow$ 2CO - Q (absorbed heat)) of the coke (C)is more strongly promoted than that of coarse-grain-size foundry coke, so that the amount of heat in the furnace decreases to cause inadequate iron source melting, while productivity and molten iron quality are degraded due to pig and slag tapping destabilization and the like caused by a decline in furnace temperature.

The present invention uses solid fuel containing 70 mass% or greater of blast furnace coke of a maximum grain size of 72 mm or less and average grain size of 60 mm or less to ensure adequate furnace heat for melting iron sources under reduced-heat condition in the furnace and, for ensuring the furnace temperature needed for stable operation, requires the furnace body heat radiation per unit internal volume in the furnace height range from the shaft part to the bottom plate at the furnace bottom to be 0.15 MW/m$^3$ or less.

Specifically, the furnace body heat radiation per unit internal volume in the furnace height range from the shaft part to the bottom plate at the furnace bottom is made 0.15 MW/m$^3$ or less by designing the heat conductivities and thicknesses of the lining refractories individually installed on the shaft part, tuyere periphery, wall portion on the furnace bottom side, and bottom plate at the furnace bottom.

In the present invention, design is implemented so that the furnace body heat radiation per unit internal volume in the furnace height range from the shaft part to the bottom plate at the furnace bottom becomes 0.15 MW/m$^3$ or less, as calculated from the heat conductivities and thicknesses of the lining refractories installed at the individual locations, in accordance with Equation (1) shown below, for example. However, the heat conductivities and thicknesses of the individual lining refractories should be suitably adjusted.

The furnace body heat radiation per unit internal volume in the furnace height range from the shaft part to the bottom plate at the furnace bottom can be expressed as a function of the heat conductivities $\lambda 1$, $\lambda 2$, $\lambda 3$ and $\lambda 4$ and the thicknesses L1, L2, L3 and L4 of the lining refractories installed at the respective locations, as indicated by the following Equation (1):

$$Q_{loss} / V = 1000 \times \Sigma_{k=1\sim4} \lambda_k (T_{ik} - T_{ok}) / L_k - S_k / V \quad . \quad . \quad . \quad . \quad (1).$$

$\lambda 1$, $\lambda 2$, $\lambda 3$ and $\lambda 4$ indicate the heat conductivities (W/mk) of the lining refractories installed on the furnace shaft part, tuyere periphery, wall portion on the furnace bottom side and bottom plate at the furnace bottom, and L1, L2, L3 and L4 indicate the thicknesses (mm) of the lining refractories installed on the furnace shaft part, tuyere periphery, wall portion on the furnace bottom side and bottom plate at the furnace bottom.

$T_{ik}$ indicates the furnace inner side wall temperature of the refractory (furnace internal condition factor) (°C), $T_{ok}$ indicates the furnace outer side wall temperature of the refractory (cooling condition factor) (°C), $S_k$ indicates the surface area of the respective regions (m$^2$), and V indicates the furnace volume (m$^3$).

More specifically, the heat conductivities and thicknesses of the lining refractories installed at the different height direction regions of the shaft furnace are designed within the prescribed range of furnace body heat radiation, taking into account the raw material state (solid, gas, molten) at the respective regions. The heat conductivities of the lining refractories installed on the shaft part, the tuyere periphery, the wall portion on the furnace bottom side and the bottom plate at the furnace bottom are preferably 2W/m · k or less, 6W/m · k or less, 6W/m · k or less, and 2W/m · k or less, respectively, and the thicknesses of the lining refractories are preferably 400 mm or greater, 550 mm or greater, 550 mm or greater, and 200 mm or greater, respectively.

The technical requirements characterizing the shaft furnace of the present invention and the reasons for defining their limits are set out below.

In employing a shaft furnace operated under high furnace pressure condition using a large amount of cheap blast furnace coke as solid fuel and further using as iron sources ones of low metallization rate requiring reduction, the present invention can, owing to the incorporation of the invention features in the structure of the shaft furnace, prevent the problem of tuyere fusing damage owing to slag rise at the time of reduced furnace pressure and inhibit decrease in furnace heat due to solution loss reaction of coke.

Further, in the operation method of a shaft furnace according to the present invention, it is preferable not only to specify use to the invention shaft furnace but also, for the reasons set out below, to stipulate the following operating conditions.

(Superficial gas velocity during shaft furnace operation: 1 Nm/s or greater)

When the superficial gas velocity falls below 1 Nm/s during shaft furnace operation, the gas transit time through the furnace increases to promote solution gas reaction and lower the gas utilization rate $\eta_{co}$. Moreover, owing to a concomitant decrease in blast volume, the tapping rate (production rate) falls, heat loss per ton of molten iron increases, thereby lowering the molten iron temperature, and the operation tends to become unstable.

Even in the case of using a large amount of blast furnace coke of smaller grain size than foundry coke, insofar as the superficial gas velocity is maintained at 1 Nm/s or greater by increasing the blast volume from the tuyeres, it is possible to expand the coke high-temperature combustion zone ($C + O_2 \rightarrow CO_2$ : exothermic reaction) to the upper part of the furnace and thus shrink the solution loss reaction zone ($C + CO_2 \rightarrow 2CO$ : endothermic reaction). As a result, it is possible to efficiently melt iron sources in the upper part of the furnace, thereby enhancing the tapping rate (production rate).

The regulation of the superficial gas velocity to 1 Nm/s or greater is achieved by controlling the blast volume through the tuyeres.

Utilization of the invention furnace enables stable operation even when the gas utilization rate $\eta_{co}$ (furnace top gas $\eta_{co} = (CO_2) / (CO + CO_2)$) is at a low level of, for example, 20% or less. Therefore, even in the case of conducting operation using as iron sources not only materials like iron scraps and formed iron that require only melting and do not require reduction but also using at least one material requiring reduction selected from among dust agglomerates, self-reducing agglomerates, reduced iron of low metallization rate, and the like, it is possible to effectively utilize reducing gas of high CO concentration, promote stable reduction of iron oxides in the raw materials, and compatibly combine reduction and melting in the production of pig iron.

EXAMPLES

Examples of the present invention will be explained next. The conditions of the examples were adopted solely for the purpose of ascertaining the feasibility of implementation and the effects of the present invention, and the invention is not limited thereto. The present invention can be carried out using a broad range of conditions, insofar as the object of the invention can be achieved without departing from the gist of the invention.

Examples

As an example of the present invention, iron sources and solid fuel (coke) were charged into the shaft furnace shown in FIG. 1 in accordance with the raw material mixing conditions shown in Table 1, and the following were measured for the case of continuous operation over seven days under the charging conditions shown in Table 3: gas utilization rate ($\eta_{co}$) of exhausted furnace top gas, exhausted furnace top gas temperature (°C), furnace pressure (hPa), blast pressure (kPa), number of blast volume reductions, number of blast shutdowns, and productivity (T/H).

Further, as a comparative example, iron sources and solid fuel (coke) were charged into a conventional shaft furnace in accordance with the raw material mixing conditions shown in Table 2, and the following were measured for the case of continuous operation over seven days under the charging conditions shown in Table 4: gas utilization rate ($\eta_{co}$) of exhausted furnace top gas, exhausted furnace top gas temperature (°C), furnace pressure (hPa), blast pressure (kPa), number of blast volume reductions, number of blast shutdowns, and productivity (T/H).

Table 5 shows the following particulars of the shaft furnace used in the invention examples and the shaft furnace used the comparative examples: location of the lowest tier of tuyeres (mm), heat conductivities (w/mk) and thicknesses (mm) of the lining refractories installed on the shaft part, tuyere periphery, wall portion on the furnace bottom side and the bottom plate at the furnace bottom, and the furnace body heat radiation per unit internal volume in the furnace height range from the shaft part to the bottom plate at the furnace bottom ($MW/m^3$).

Gas utilization rate $\eta_{co}$ (TOP) of exhausted furnace top gas was defined as:

$$\eta_{CO} \text{ (TOP)} = \text{(CO}_s \text{ content (vol\%) of exhausted gas)} /$$
$$\text{(CO}$$

content (vol%) of exhausted gas + $CO_s$ content (vol%) of exhausted gas).

Average metallization rate M was defined as:

$$M = \text{(Metallic iron (M.Fe) (mass\%) in iron sources)} /$$
$$\text{(total iron in iron sources (T.Fe) (mass\%))}.$$

As shown in Table 3, in the Invention Examples 1 to 5 using the shaft furnace whose location of the lowest tier of tuyeres and the furnace body heat radiation per unit internal volume from the shaft part to the bottom plate at the furnace bottom satisfied the conditions specified by the present invention, even when the furnace pressure fell owing to blast volume reduction or blast shutdown in the course of melting iron sources using solid fuel containing 70 to 100 mass% of blast furnace coke, it was possible to prevent problems such as tuyere fusing damage, maintain the gas utilization rate of exhausted furnace top gas at a high level, and efficiently melt and reduce the iron sources.

Among the Invention Examples, the Invention Examples 1 to 4 are noteworthy in the point that by controlling the gas volume blown in through the tuyeres so as to establish a superficial gas velocity of 1 Nm/s or greater, the furnace pressure was maintained high to enable production of pig iron at high productivity.

On the hand, in the Comparative Examples 1 to 5 shown in Table 4, owing to the use of a shaft furnace whose location of the lowest tier of tuyeres and the furnace body heat radiation per unit internal volume from the shaft part to the bottom plate at the furnace bottom did not satisfy the conditions specified by the present invention, the furnace pressure rose and $\eta_{CO}$ fell as the percentage of blast furnace coke increased, so that only around 40% of blast furnace coke could be incorporated at the very maximum.

From these results it can be seen that in operation under high furnace pressure condition using a large amount of cheap blast furnace coke as solid fuel, it is possible by applying the present invention to optimize the height of the furnace tuyeres in the shaft furnace and the furnace body heat radiation from the shaft part to the bottom plate at the furnace bottom, thereby preventing tuyere fusing damage problems caused by slag level rise when furnace pressure falls during blast volume reduction or blast shutdown and inhibiting decrease in furnace heat due to solution loss reaction of coke, thus making it possible to produce pig iron stably and at high productivity.

Table 1 (Invention Examples)

| Raw material condition | High metallization rate iron source | | | Low metallization rate iron source | | Solid fuel | | | | |
| | Shredder scraps (M: 99 mass%) | Pig iron scraps (M: >99 mass%) | Reduced iron (M:96 mass%) | Dust pellets C:15 mass%, M:5 mass%) | Self-reducing agglomerates (C:15 mass M: 5 mass%) | Blast furnace coke | | | Other | Ratio of solid fuel to iron source (exclusive ratio) (mass%) |
| | | | | | | Grain size (mm) | Ash (mass%) | Mixing Ratio (mass%) | | |
|---|---|---|---|---|---|---|---|---|---|---|
| A | 70 | 5 | 25 | 0 | 0 | 50 | 13 | 80 | Foundry coke | 19 |
| B | 90 | 0 | 10 | 0 | 0 | 50 | 13 | 100 | - | 20 |
| C | 60 | 0 | 30 | 10 | 0 | 50 | 13 | 70 | Foundry coke | 21 |
| C | 5 0 | 0 | 30 | 10 | 10 | 50 | 13 | 80 | Foundry coke | 21 |
| E | 50 | 0 | 30 | 20 | 0 | 50 | 13 | 100 | - | 23 |

Note: M is average metallization rate. C is carbon content.

Table 2 (Comparative Examples)

| Raw material condition | High metallization rate iron source | | | Low metallization rate iron source | | Solid fuel | | | | | Ratio of solid fuel to iron source (exclusive ratio) (mass%) |
|---|---|---|---|---|---|---|---|---|---|---|---|
| | Shredder scraps (M: 99 mass%) | Pig iron scraps (M: >99 mass%) | Reduced iron (M:96 mass%) | Dust pellets C:10 mass%, M:2 mass%) | Self-reducing agglomerates (C: 15 mass M: 5 mass%) | Blast furnace coke | | | Other | | |
| | | | | | | Grain size (mm) | Ash (mass%) | Mixing Ratio (mass%) | | | |
| A | 70 | 5 | 25 | 0 | 0 | 50 | 13 | 30 | Foundry coke | | 17 |
| B | 90 | 0 | 10 | 0 | 0 | 50 | 13 | 40 | - | | 18 |
| C | 60 | 0 | 30 | 10 | 0 | 50 | 13 | 30 | Foundry coke | | 19 |
| C | 50 | 0 | 30 | 10 | 10 | 50 | 13 | 30 | Foundry coke | | 19 |
| E | 50 | 0 | 30 | 20 | 0 | 50 | 13 | 20 | - | | 20 |
| Note: M is average metallization rate. C is carbon content. | | | | | | | | | | | |

Table 3 (Invention Examples)

| Example type and number | Raw material condition | Superficial gas velocity (Nm/s) | Furnace pressure (hPa) | Gas utilization rate of exhausted furnace gas ($\eta_{co}$) (%) | Exhausted furnace top gas temp. (°C) | Blast pressure (kPa) | Number of blast volume reductions | Number of blast shutdowns | Productivity (T/H) |
|---|---|---|---|---|---|---|---|---|---|
| Invention 1 | A | 1.2 | 200 | 22 | 180 | 20 | 2 | 0 | 56 |
| Invention 2 | B | 1.1 | 220 | 19 | 150 | 22 | 3 | 0 | 55 |
| Invention 3 | C | 1.1 | 220 | 23 | 140 | 22 | 4 | 0 | 48 |
| Invention 4 | D | 1.0 | 220 | 22 | 130 | 22 | 4 | 0 | 48 |
| Invention 5 | E | 0.9 | 230 | 22 | 150 | 23 | 5 | 0 | 42 |

Table 4 (Comparative Examples)

| Example type and number | Raw material condition | Superficial gas velocity (Nm/s) | Furnace pressure (hPa) | Gas utilization rate of exhausted furnace gas ($\eta_{co}$) (%) | Exhausted furnace top gas temp. (°C) | Blast pressure volume (kPa) | Number of blast reductions | Number of blast shutdowns | Productivity (T/H) |
|---|---|---|---|---|---|---|---|---|---|
| Comparative 1 | A | 1.2 | 120 | 30 | 230 | 12 | 2 | 0 | 48 |
| Comparative 2 | B | 1.1 | 140 | 27 | 200 | 14 | 4 | 1 | 46 |
| Comparative 3 | C | 1.1 | 140 | 30 | 200 | 14 | 3 | 0 | 40 |
| Comparative 4 | D | 1.1 | 140 | 30 | 210 | 14 | 3 | 0 | 40 |
| Comparative 5 | E | 1.0 | 140 | 32 | 240 | 14 | 4 | 1 | 35 |

Table 5

| Furnace type | Tuyeres | | | Furnace diam at tuyeres (mm) | Lining refractory heat conductivity (w/mk) | | | | Lining refractory thickness (mm) | | | | Fur nace body heat radiation (MW/m$^3$) |
|---|---|---|---|---|---|---|---|---|---|---|---|---|---|
| | Tiers | Units | Lowest tier location (mm) | | Shaft part | Tuyere periphery | Btm side wall | Btm plate | Shaft part | Tuyere periphery | Btm side wall | Btm plate | |
| Inven tion | 2 | Above: 4 Below: 8 | 2300 | 2900 | 1.5 | 5 | 5 | 1.5 | 450 | 600 | 600 | 250 | 0.12 |
| Compar ative | 2 | 6 | 1200 | 2600 | | 10 | 10 | 5 | - | 500 | 500 | 200 | 0.22 |

Note: The tuyere location is expressed as the distance between the tuyere lower face and the upper face of the bottom plate. The furnace body heat radiation is expressed as the body heat radiation per unit interval volume from the shaft part to the bottom plate.

INDUSTRIAL APPLICABILITY

As set out in the foregoing, in the operation of a cupola or other shaft furnace under high furnace pressure condition using a large amount of cheap blast furnace coke as solid fuel, the present invention makes it possible to establish an adequate depth from the tuyeres of the shaft furnace to the furnace bottom, to optimize the height of the furnace tuyeres and the furnace body heat radiation from the shaft part to the bottom plate at the furnace bottom, thereby preventing tuyere fusing damage problems caused by slag level rise when furnace pressure falls during blast volume reduction or blast shutdown, and to compensate for decrease in furnace heat caused by solution loss reaction of coke.

Therefore, by applying the present invention to produce pig iron from scrap iron, pig iron scraps arising in the course of ironmaking processes, ironmaking dust and other iron waste materials, it is possible to lower the cost of producing pig iron and to conduct the operation stably at high productivity. The contribution to industry of the present invention is therefore considerable.

**Claims**

1. A shaft furnace for producing pig iron by charging an iron source of high metallization rate whose average metallization rate is 95% or greater and a solid fuel containing 70 to 100 mass% of blast furnace coke in layered state or mixed state from the furnace top onto a bed of coke filling a lower region of the furnace and melting the iron source by blowing in air through tuyeres at the bottom region of the furnace, which shaft furnace is **characterized** that:

   (i) a distance from a lower face of the lowest tier of tuyeres in the direction of the furnace height to an upper face of a bottom plate at the furnace bottom is 0.7-fold or greater the furnace diameter at the location of the lower face of the tuyeres; and
   (ii) as calculated from the heat conductivities and thicknesses of lining refractories individually installed on a shaft part, a tuyere periphery, a wall portion on the furnace bottom side and the bottom plate at the furnace bottom, the furnace body heat radiation per unit internal volume in the furnace height range from the shaft part to the bottom plate at the furnace bottom is 0.15 MW/m$^3$ or less.

2. A shaft furnace according to claim 1, **characterized in that** an iron source of low metallization rate whose average metallization rate is less than 95% is used as an iron source in addition to the iron source of high metallization rate whose average metallization rate is 95% or greater.

3. A shaft furnace according to claim 1 or 2, **characterized in that** the heat conductivities of the lining refractories installed on the shaft part, the tuyere periphery, the wall portion on the furnace bottom side and the bottom plate at the furnace bottom are 2W/m · k or less, 6W/m · k or less, 6W/m · k or less, and 2W/m · k or less, respectively, and the thicknesses of the lining refractories are 400 mm or greater, 550 mm or greater, 550 mm or greater, and 200 mm or greater, respectively.

4. A shaft furnace according to any of claims 1 to 3, **characterized in that** the blast furnace coke is of a maximum grain size of 72 mm or less and an ash content of 9 mass% or greater.

5. A shaft furnace according to any of claims 1 to 4, **characterized in that** the iron source of high metallization rate is one or more of iron scraps, pig iron, casting scraps, hot briquetted iron (HBI) and direct reduced iron (DRI), and the iron source of low metallization rate is dust agglomerates or self-reducing agglomerates.

6. An operation method of a shaft furnace to produce pig iron using a shaft furnace according to any of claims 1 to 5 by charging an iron source of high metallization rate whose average metallization rate is 95% or greater and a solid fuel containing 70 to 100 mass% of blast furnace coke in layered state or mixed state from the furnace top onto a bed of coke filling a lower region of the furnace and melting the iron source by blowing in air through tuyeres at the bottom region of the furnace, which operation method of a shaft furnace is **characterized** that:

   air is blown through the tuyeres to make superficial gas velocity 1 Nm/s or greater.

7. An operation method of a shaft furnace according to claim 6, **characterized in that** an iron source of low metallization rate whose average metallization rate is less than 95% is used as an iron source in addition to the iron source of high metallization rate whose average metallization rate is 95% or greater.

8. An operation method of a shaft furnace according to claim 6 or 7, **characterized in that** the heat conductivities of the lining refractories installed on the shaft part, the tuyere periphery, the wall portion on the furnace bottom side and the bottom plate at the furnace bottom are 2W/m · k or less, 6W/m · k or less, 6W/m · k or less, and 2W/m · k or less, respectively, and the thicknesses of the lining refractories are 400 mm or greater, 550 mm or greater, 550 mm or greater, and 200 mm or greater, respectively.

9. An operation method of a shaft furnace according to any of claims 6 to 8, **characterized in that** the blast furnace coke is of a maximum grain size of 72 mm or less and an ash content of 9 mass% or greater.

10. An operation method of a shaft furnace according to any of (6) to (9), **characterized in that** the iron source of high metallization rate is one or more of iron scraps, pig iron, casting scraps, hot briquetted iron (HBI) and direct reduced iron (DRI), and the iron source of low metallization rate is dust agglomerates or self-reducing agglomerates.

# Fig.1

**INTERNATIONAL SEARCH REPORT**

| International application No. |
| --- |
| PCT/JP2008/063077 |

A.   CLASSIFICATION OF SUBJECT MATTER
*C21B11/02(2006.01)i, F27B1/14(2006.01)i, F27B1/16(2006.01)i*

According to International Patent Classification (IPC) or to both national classification and IPC

B.   FIELDS SEARCHED

Minimum documentation searched (classification system followed by classification symbols)
C21B11/02, F27B1/14, F27B1/16

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| X | Yasuo KAMEI et al., "Bifuntan Taryo Fukikomi o | 1,3,4 |
| Y | Heiyo shita Kosanso Nodo Kuki Fuki Tategataro ni | 2,5-10 |
|   | yoru Scrap Yokai", Journal of the Iron & Steel |   |
|   | Institute of Japan, 01 February, 1993 (01.02. |   |
|   | 93), Vol.79, No.2, pages 139 to 146 |   |
|   |   |   |
| Y | JP 10-36906 A  (Nippon Steel Corp.), | 2,5,7,10 |
|   | 10 February, 1998 (10.02.98), |   |
|   | Claim 1 |   |
|   | & US 6129776 A          & EP 0818543 A1 |   |
|   |   |   |
| Y | JP 11-71607 A  (NKK Corp.), | 6-10 |
|   | 16 March, 1999 (16.03.99), |   |
|   | Claim 1; Par. Nos. [0005] to [0007], [0015], |   |
|   | [0016] |   |
|   | (Family: none) |   |

| ☒   Further documents are listed in the continuation of Box C. | ☐   See patent family annex. |
| --- | --- |

\*      Special categories of cited documents:
"A"   document defining the general state of the art which is not considered   to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
| --- | --- |
| 18 September, 2008 (18.09.08) | 30 September, 2008 (30.09.08) |

| Name and mailing address of the ISA/ | Authorized officer |
| --- | --- |
| Japanese Patent Office |   |
| Facsimile No. | Telephone No. |

Form PCT/ISA/210 (second sheet) (April 2007)

**INTERNATIONAL SEARCH REPORT**

| International application No. |
|---|
| PCT/JP2008/063077 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 9-263811 A (Sumitomo Metal Industries, Ltd.), 07 October, 1997 (07.10.97), Par. Nos. [0060], [0061] (Family: none) | 1-10 |
| A | JP 56-156709 A (Mitsubishi Heavy Industries, Ltd.), 03 December, 1981 (03.12.81), Page 3, lower right column, line 19 to page 4, upper left column, line 4 (Family: none) | 1-10 |
| A | JP 7-278635 A (Nippon Steel Corp.), 24 October, 1995 (24.10.95), Par. No. [0030] (Family: none) | 1-10 |
| A | JP 7-332860 A (Taiyo Chuki Kabushiki Kaisha), 22 December, 1995 (22.12.95), Claims 1, 2; Fig. 1 (Family: none) | 1-10 |
| A | JP 2002-357309 A (NKK Corp.), 13 December, 2002 (13.12.02), Par. Nos. [0038] to [0041] (Family: none) | 1-10 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10036906 A
- JP H09203584 A

- JP 2007002305 A

**Non-patent literature cited in the description**

- **Goksel et al.** *Transactions of the American Foundrymen's Society, Vol. 85, AFS Des Plaines, III,* 1977, vol. 85, 327-332